# EUROPEAN PATENT APPLICATION

(11) **EP 4 607 724 A1**
(43) Date of publication of application: **27.08.2025**
(21) Application number: 25305109.8
(22) Date of filing: 28.01.2025
(51) Int. Cl.: H02G 1/14, H01R 13/523, H01R 24/20, H02G 9/12, E02B 17/00, H02G 15/18

(54) **METHOD FOR CONNECTING AN OFFSHORE CABLE END AND A PLATFORM CABLE END ON A PLATFORM**

(30) Priority: 22.02.2024 NO 20240159
(71) Applicant: Nexans, 92400 Courbevoie (FR)
(72) Inventor: FRISK, Nils-Bertil, 92400 Courbevoie (FR); HALL, Jon-Arne, 92400 Courbevoie (FR)
(74) Representative: Acapo Onsagers AS

(57) **Abstract**

A method for connecting an offshore cable end and a platform cable end on a platform comprises the steps of a) pulling the offshore cable end, which is covered by a pull-in head, onto the platform through the pull-in head, b) fixating the offshore cable end in a platform-mounted hang-off device, c) removing the pull-in head from the offshore cable end, d) placing the platform cable end in a predefined position relative to the fixated offshore cable end, e) connecting the offshore cable conductor and the platform cable conductor by attaching an offshore cable conductor and a platform cable conductor to a connector, and f) enclosing the offshore cable end, the platform cable end and the connector by a joint body.

## Description

### Field of the invention

The present invention relates to a method and a system for connecting an offshore cable end and a platform cable end on a platform.

### Background

The installation of an offshore cable to a platform is challenging due to great space restrictions. Cable ways, cable routing planning and cable pull-in operations inside these structures is cumbersome especially when performed offshore. It is known to install a cable inside the platform and cable termination in a converter or transformer hall while the platform is still in the dockyard, such that the allocated space is more accessible. However, a final connection of cable inside the platform and an offshore cable is still performed as an offshore operation. Today this is accomplished by pulling in the offshore cable to a jointing location and installing a field joint on the platform vertical or horizontally. This requires a lot of time planning, executing, space and need of equipment for complicated pull-in operations offshore and in addition time and resources to be spent for offshore jointing teams during assembly of such joints.

### SUMMARY OF THE INVENTION

The object of the invention lies in providing an alternative and simple method and an alternative system for connecting an offshore cable and a platform cable on a platform.

The object is met by a method and a system for connecting an offshore cable end and a platform cable end on a platform as defined by the appended claims and in the following:
In a first aspect, the invention relates to a method for connecting an offshore cable end and a platform cable end on a platform, the method comprising the steps of: a) pulling the offshore cable end of an offshore cable, wherein the offshore cable end is covered by a pull-in head, onto the platform through the pull-in head, b) fixating the offshore cable in a platform-mounted hang-off device, c) removing the pull-in head from the offshore cable end, d) placing the platform cable end in a predefined position relative to the fixated offshore cable end, e) connecting an offshore cable conductor and a platform cable conductor by attaching the offshore cable conductor and the platform cable conductor to a connector, and f) enclosing the offshore cable end, the platform cable end and the connector by a joint body.

In this context, the term platform may refer to a floating offshore wind platform, which supports a wind energy turbine. Different types of offshore wind platforms are known, which may include, for example, a barge, a semi-submersible, a spar, and a tension legs platform. On the platform, one end of the platform cable may be connected to an electric component, such as switchgear, converters, transformers, or other elements of power take-off. Another end of the platform cable, which is further referred to as "platform cable end" is to be jointed to the offshore cable, which delivers the power output from the wind energy turbine to a transmission network. The offshore cable may be an array cable to deliver power from the wind energy turbine to an offshore substation, and/or an export cable to deliver power from the wind energy turbine or the offshore substation to an onshore substation.

The platform may thus also refer to an offshore substation platform, which may in general be a floating platform. It may also be designed as a barge, a semi-submersible, a spar, or a tension legs platform.

By the method according to the invention, a preparation of a platform cable end and/or of an offshore cable end for a jointing process could be conducted on land or in a dockyard prior to offshore operations, such that the jointing process can be simplified and accelerated offshore.

The pull-in head is a component which is attachable to the offshore cable end. It may comprise a lug, a hook, a flange or the like for connecting the pull-in head to a winching cable or a similar device for pulling the offshore cable. The pull-in head may be configured to surround the offshore cable end. It may be mechanically attachable to the offshore cable end, for example by clamping. The pull-in head may comprise a rigid head section which may be followed by an elastic part that additionally protects the offshore cable and prevents an excessive bending. However, the pull-in head may also be a completely rigid component. Preferably, the pull-in head is configured to cover the offshore cable end hermetically, such that the offshore cable end does not come into contact with sea water. It may comprise a hollow space, into which the offshore cable end is inserted, and which may be filled with oil or which may be left dry. The "pull-in head" may also be known as "pulling head".

A cable laying vessel may be used for laying the offshore cable into the sea. Resultantly, the offshore cable end, to which the pull-in head is attached, may lie on the seabed. It may be retrieved from the sea and be pulled onto the platform when conducting the method according to the invention. Retrieving the pull-in head may comprise attaching the pull-in head to a winching cable. This operation may be conducted by a remotely operated submersible vehicle or through any other available techniques. Pulling the offshore cable onto the platform may be done by operating a winch that winds up a winching cable attached to the pull-in head.

A conductor of the offshore cable, i.e. the offshore cable conductor, may already be exposed. This is to be understood as an offshore cable conductor section not being covered by any further insulating or protecting layer, when covered by the pull-in head. The offshore cable end may partially or completely be prepared for a jointing process prior to attaching the pull-in head to it. In this context, the term "prepare" is to be understood as removing layers that surround the respective conductor in a manner that the layer structure can be restored during a jointing process. This may also include conducting surface operations, such as grinding, on the respective layers to achieve desired surface qualities. This is explained in more detail further below. Depending on the level of preparation of the offshore cable end, time, working effort and costs can be reduced during the jointing process on sea, as a dedicated jointing operation on a vessel or the like does not need to be conducted. Instead, the jointing operation can be provided directly on the platform.

After pulling the offshore cable end onto the platform, the offshore cable is then fixated in the hang-off device. The hang-off device may be understood as a device for securing power cables to a part of a platform. For example, the offshore cable may be threaded through an interior space of the hang-off device and be fixated by clamping in the hang-off device.

The hang-off device may be fixedly attached to the platform, for example at an upper side of a part of the platform. The offshore cable may preferably be fixated by clamping. After fixating, the offshore cable end may be arranged in a distance to the hang-off device to provide a certain length for conducting the connecting operation. By the fixating, the offshore cable is mechanically connected to the platform to mechanically decouple the part of the offshore cable that extends out of the hang-off device from pulling forces on the offshore cable.

After arranging the offshore cable in the hang-off device, the pull-in head may be removed. Resultantly, the offshore cable end is exposed and can be prepared for being connected to the platform cable end.

The platform cable end, which may have already been installed arranged on the platform in the dockyard, may now be placed into a predetermined relative position to the offshore cable end, such that both ends can be connected to each other. For example, the offshore cable end may point upwards and away from the hang-off device, while the platform cable end points downwards towards the offshore cable end. Both cable ends and may be placed substantially coaxially before connecting them.

The conductors of the cables may be connected by a connector, which is to be understood as a conductive component configured to transfer electric current between the conductors. The connector may configured to receive the offshore cable conductor and the platform cable conductor. For example, the connector may comprise two openings which are arranged at opposite ends of the connector and which are configured to receive the respective conductor, or a part attached to the respective conductor. Furthermore, the connector may be configured to mechanically lock the conductors, e.g. by screwing, bolting, crimping or other methods.

After connecting both conductors, the insulation of the jointing region is restored. This means that the region between the offshore cable and the platform cable needs to be equipped with at least an insulation layer and/or a semiconducting layer that corresponds to an insulation layer and/or a semiconducting layer of both cables. According to the invention this is conducted by arranging a joint body to cover both ends and the connector.

The term joint body does not necessarily refer to a single body, but may also include several layers of a moldable material, tapes, foils, or the like. The joint body may be a generally tubular element of a material that surrounds both the offshore cable conductor and the platform cable conductor as well as the connector and is intended to connect the insulation system of the offshore cable end to the platform cable end.

Since wind energy turbines and/or converters or transformers connected to them may be configured to deliver electric power with high voltage (HV), it is mandatory to achieve a high quality insulation and reduce risks for dielectric breakdown to a minimum. HV cables for the transmission of electrical power usually comprise a conductor as a core element and an insulation system that is designed to meet the requirements for the use of the cable. For example, the conductor may be surrounded by an inner semiconducting layer. The conductor may be stranded and thus may comprise a corrugated or wavy peripheral surface. The inner semiconducting layer assists in providing a harmonic and even electrical field around the conductor. Local air pockets between the conductor and a subsequent insulating layer can be prevented by this and local electric discharges are avoided. The inner semiconducting layer may be surrounded by an insulating layer, which usually comprises a polymer material. The insulating layer may usually be surrounded by an outer semiconducting layer, which is often covered by a metallic screen and a polymer outer sheath.

The joint body may be fixated to the cables and be covered by an additional cover. This method for connecting the offshore cable end and the platform cable end does not require a lot of time planning, executing, space and need of equipment for being conducted offshore.

The method may comprise the preceding step of p1) removing at least one outer layer of the platform cable end prior to step a), thereby exposing at least the platform cable conductor. As indicated above, particularly HV cables comprise a conductor as a core layer, wherein the conductor may be made of copper, aluminum or other metallic materials. The conductor may be stranded. It is commonly surrounded by an inner semiconducting layer, which assists in harmonizing the electrical field around the conductor. The inner semiconducting layer may be surrounded by an insulating layer, which is usually provided in the form of a polymeric material. The inner semiconducting layer may be bonded to the insulating layer to avoid the creation of voids or other irregularities. The insulating layer may be surrounded by an outer semiconducting layer, which in turn may be covered by a polymeric sheath. Further layers could be provided, which are not ruled out herein. The step p1) may thus comprise removing of at least one of the layers that surrounds the platform cable conductor in order to expose the platform cable conductor. For example, before the connecting operation, the platform cable end may simple have a continuous and substantially flat cutting surface. Prior to step a), the layers that surround the platform cable conductor may be removed to allow a connection of the conductor to the connector. However, at least one of the outer insulation layer and the outer semiconducting layer may have been removed previously and the step p1) may thus be directed to removing only at least one of the inner insulating layer and the inner semiconducting layer.

The method may comprise the preceding step of p2) arranging the joint body on the platform cable end in a distance to the platform cable conductor or the offshore cable end in a distance to the offshore cable conductor prior to step f) in the form of a pre-molded joint body that is slidable along the respective cable. The pre-molded joint body may comprise a design that is adapted to the layer structure of both the platform cable and the offshore cable. For example, it may comprise an inner semiconductive elastomeric layer, an outer semiconductive elastomeric layer and an insulating layer sandwiched between both semiconductive layers. The joint body may be placed on one of the cables prior to step f) and may be slidable along the respective cable over the connector in order to enclose both cable ends and the connector.

The joint body may be configured to have a first operating state, in which it is slidable, and a second operation state, in which it presses itself onto the cable ends and the connector. For example, the first operating state may be realized by placing a removable tube inside the joint body, which tube holds the joint body in an expanded position to allow a sufficient space between the cable and the joint body for sliding it along the respective cable. After placement of the joint body, the tube may be removed in order to let the joint body press itself onto the connector and the cable ends in a radial inward direction. Other variants are not ruled out and the joint body may also comprise only a single operating state and requires a sufficient force to be slid along the respective cable.

Step f) may comprise moving the joint body relative to the cable ends to enclose the cable ends and the connector. As mentioned above, this may comprise sliding the joint body to the desired position. Moving the joint body may be done by attaching a winch to the joint body and pulling the joint body to the desired location. After placing the joint body, it encloses and seals the cable ends and the connector.

The method may comprise the preceding step of p3) attaching the pull-in head to the offshore cable end to protect the offshore cable end in a watertight manner. Various different designs of pull-in heads are known. Types of pull-in heads exist, which require clamping a cable armor between two clamping bodies. Other types exist, which are configured to hold a cable grip comparable to a Chinese finger trap, into which the offshore cable is inserted. In general, the offshore cable end needs to be encapsulated in a watertight manner, which may be through the pull-in head alone or in combination with a cable sealing attached to the offshore cable end inside the pull-in head.

The method may comprise the preceding step of p4) placing the offshore cable end with the attached pull-in head into the sea prior to step a). This may, for example, be conducted by a cable laying vessel, which is configured to overboard the offshore cable from a spool carried on board the vessel.

The method may comprise the preceding step of p5) removing at least one outer layer of the offshore cable end prior to step a), thereby exposing at least the offshore cable conductor. This may substantially correspond to the explanation of step p1) mentioned above. The offshore cable and the platform cable may preferably have the same layer design. Furthermore, they may have the same cross-section.

The method may comprise the preceding step of p6) finishing at least one exposed layer surface of at least one of the offshore cable end and the platform cable end to produce a predetermined surface quality for a connection interface. As mentioned above regarding the HV cables, all layers of both cable ends need to be finished prior to the jointing process. For example, the characteristics of the outer boundary surfaces of an insulation layer, i.e. the outer surface of the layer and an inner surface of the layer, and/or of a semiconducting layer, are important to meet a desired insulation behavior. Particularly, as the surfaces of the insulating layer may be subjected to tangential and radial electrical fields, their surface qualities are crucial for avoiding local electric discharges and preventing a failure due to a dielectric breakdown. Particularly, a finishing of an insulation layer may thus be crucial.

Step d) may comprise placing a platform cable end section, which comprises the platform cable end, on a support surface such that the platform cable conductor and the offshore cable conductor, when the offshore cable end is held by the hang-off device, face each other and are arranged in a predetermined distance to each other. The support surface may be curved about a horizontal axis. The platform cable may lie on the support surface in such a way that it rests on an upper apex of the support surface and in that the platform cable end with the pull-in head attached to it hangs down from the support surface loosely. The support surface may be movable or adjustable in a horizontal and/or vertical direction to adjust the final position of the pull-in head. By placing the platform cable on the support surface, it may be held through gravity alone or by means of a holding device that fixates the platform cable relative to the support surface.

Step e) may comprise axially moving the platform cable end towards the offshore cable end, when the offshore cable is held by the hang-off device, such that at least one of the platform cable conductor and the offshore cable conductor is moved into the connector. This may, for example, be done by vertically moving, e.g. lowering, the support surface mentioned above, or another kind of device used for holding the platform cable.

In a second aspect, the invention relates to a system for connecting an offshore cable end and a platform cable end on a platform, the system comprising a pull-in head configured to be attached to an offshore cable end of an offshore cable, a platform-mountable hang-off device configured to hold the offshore cable, a joint body configured to be arranged on the platform cable, and a conductive connector configured to receive an offshore cable conductor and a platform cable conductor, wherein the system is configured to provide a connection of the offshore cable end and the platform cable end by pulling the offshore cable end by means of the pull-in head onto the platform, fixating the offshore cable end in the hang-off device, removing the pull-in head from the offshore cable end, placing the platform cable end, which has an exposed platform cable conductor, in a predefined position relative to the fixated offshore cable end, connecting the offshore cable conductor and the platform cable conductor by attaching the offshore cable conductor and the platform cable conductor to the connector, and enclosing the offshore cable end, the platform cable end and the connector by the joint body.

The connector may have two receiving openings at opposite sides of the connector, wherein the connector comprises locking elements for locking at least one of the conductors in the respective receiving opening.

The locking elements may comprise a locking ring.

The connector may comprise a gliding ferrule for receiving and centering the respective conductor. The gliding ferrule may comprise the shape of a bushing, wherein a shell or sleeve of the bushing may have a partially open structure that is resilient in a radial and/or circumferential direction. The gliding ferrule may thus ensure a tight contact between the connector and an insertable conductor.

The joint body may be a pre-molded joint body configured to be slidable along the platform cable.

The joint body may have an inner shield, an insulating layer and an outer shield.

The system may comprise a platform-mountable lifting device couplable with the pull-in head.

### Brief description of the drawings

In the following description this invention will be further explained by way of exemplary embodiments shown in the drawings:
Fig. 1 shows a platform and an offshore cable pulled by a lifting device in a schematic view.
Fig. 2 shows a hang-off device in a lateral view
Fig. 3a, 3b and 3c show platform cable conductor and offshore cable conductor connected through two different embodiments of connectors.
Fig.4 shows a pre-molded joint body in a sectional view.
Fig. 5 shows a part of the pre-molded body on the connector.
Fig. 6a to 6d show a method of connecting a platform cable end and an offshore cable end.

### Detailed description of exemplary embodiments

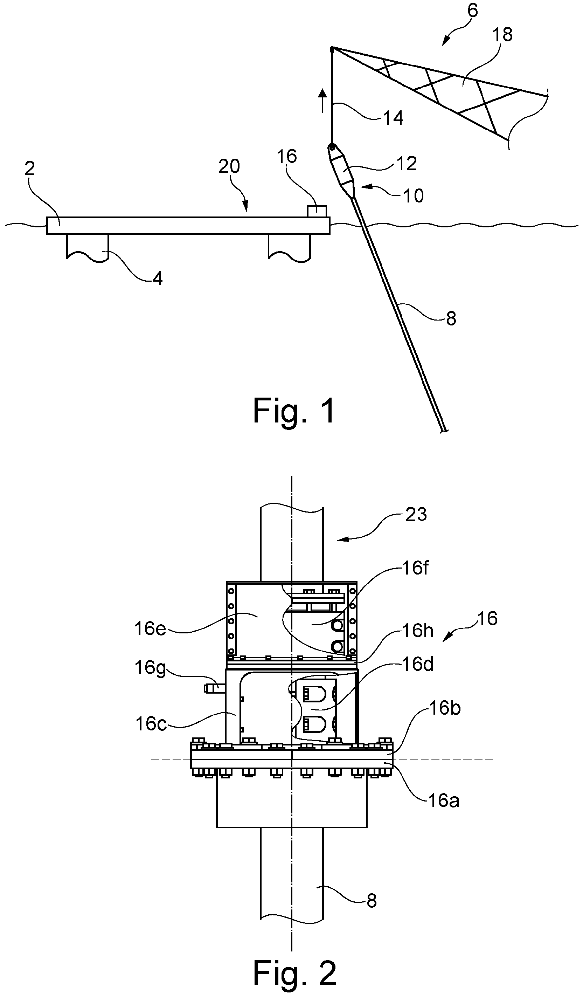

Fig. 1 schematically shows a platform 2, which may be a floating offshore platform for supporting a wind energy turbine on sea. In this exemplary embodiment, the platform 2 has a plurality of legs 4 at its underside, which may be buoyant. However, a variety of types of platforms 2 exist, which may differ from the example shown in Fig. 1 and which may all be considered in the context of the invention.

In this illustration, a lifting device 6 is shown, which lifts an offshore cable 8 from the sea. The lifting device 6 may be arranged on a vessel (not shown) in the vicinity of the platform 2 or directly on the platform 2.

The offshore cable 8 has an offshore cable end 10, which is covered by a pull-in head 12. The pull-in head 12 is connected to a winch wire 14 of the lifting device 8.

The lifting device 6 is exemplarily configured to wind up the winch wire 14 to lift the pull-in head 12 or to wind down the winch wire 14 to lower the pull-in head 12. By pulling up the offshore cable end 10, the offshore cable 8 is partially pulled out of the sea. The lifting device 6 may comprise at least one rotatable and/or swivable arm 18 or any other suitable device to move the lifted offshore cable end 10 in a horizontal direction. When placed accordingly, the offshore cable end 10 can be fixated in a hang-off device 16 on an upper side 20 of the platform 2. Resultantly, the offshore cable end 10 will be arranged above the hang-off device 16 and the remaining part of the offshore cable 8 runs from the hang-off device 16 into the sea.

Fig. 2 schematically shows the hang-off device 16 in a lateral view. The illustrated hang-off device 16 may be considered as an example and other embodiments can be used. The hang-off device 16 exemplarily has a platform interface flange 16a, a split flange 16b, an extension piece 16c, a temporary clamp 16d inside the extension piece 16c, and an armor block cover 16e that covers an armor block 16f. Exemplarily, the hang-off device 16 has a grounding point 16g arranged at the extension piece 16c connectable to a ground terminal on the platform 2. The armor block cover 16e comprises an armor block flange 16h that is connected to the extension piece 16c.

The offshore cable 8 is mechanically held in the hang-off device 16 and an offshore cable end section 22 extends away from the armor block cover 16e.

Between the platform interface flange 16a and the split flange 16b, a platform interface is defined. The flanges 16a and 16b can be connected to a rim section of a through hole on the upper side 20 of the platform 2. A offshore cable end section 23 extends from the hang-off device 16 in an upward direction.

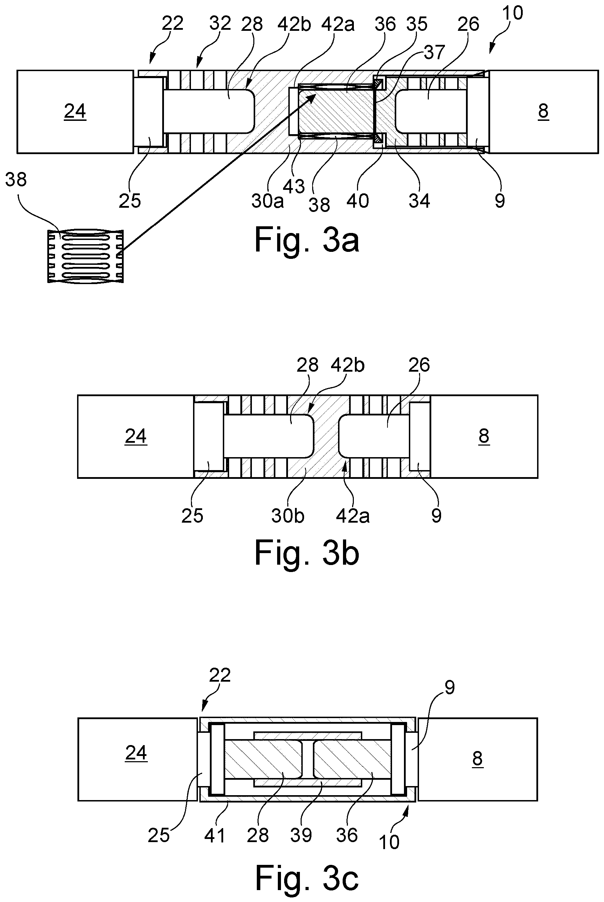

Fig. 3a shows the offshore cable end 10 on the right hand side and a platform cable end 22 of a platform cable 24 on the left hand side in a lateral sectional view. Both ends 10 and 22 have an exposed conductor, i.e. an offshore cable conductor 26 and a platform cable conductor 28. An outermost layer of both cables 8 and 28, e.g. a polymer sheath, is removed. Underneath, a part of an outer layer, i.e. an insulation system 9 and 25, respectively, is visible. The conductors 26 and 28 are exposed by removing at least a part of the insulation system 9 and 25. The conductors 26 and 28 are connected to each other through a connector 30a. In this example, the connector 30a is fixedly attached to the platform cable conductor 28 by a crimping connection 32. However, instead of the crimping connection, also a screwing or welding connection may be provided.

The offshore cable conductor 26 in turn is attached to a connector insert 34, which has an axial extension piece 36, which is inserted into a center gliding ferrule 38. The gliding ferrule 38 is resilient in a radial and/or circumferential direction, such that the axial extension piece 36 is faced with a radial inwardly directed pressing force to improve the contact between the extension piece 36 and the ferrule 38.. The connector insert 34 may be crimped, screwed or welded to the offshore cable conductor 26 and is insertable into a main opening 40 of the connector 30a. The gliding ferrule 38 is inserted into a first receiving opening 42a and presses in a radial outward direction onto the surface area of the first receiving opening 42a. To fix the axial position of the gliding ferrule 38 upon insertion of the extension piece 36, the first receiving opening 42a has a shoulder 43, onto which the gliding ferrule 38 abuts.

At an end facing the main opening 40, a locking ring 35 is arranged. When inserting the extension piece 36 into the gliding ferrule 38, the locking ring 35 will be slightly radially expanded when the extension piece 36 passes. The extension piece 36 exemplarily has a radial groove 37, into which the locking ring 35 snaps. Thus, the extension piece 36 is locked in the connector 30a.

The connector insert 34 may be attached to the offshore cable end 10 before attaching the pull-in head 16 to the offshore cable end 10. On the opposite side, a second receiving opening 42b is provided, into which the platform cable conductor 28 is inserted to be crimped.

In fig. 3b, an alternative embodiment of a connector 30b is shown, which is exemplary attached to both the offshore cable conductor 26 and the platform cable conductor 28 through crimping, screwing or welding. The connector 30b may be attached to one of the conductors 26 and 28 before. The connector 30b exemplarily has two receiving openings 42a and 42b at its opposite sides, wherein the receiving openings 42a and 42b are shaped with substantially the same size and shape.

In Fig. 3c, a connector 39 is provided, which is crimpable to both conductors 28 and 36. In addition, a metallic shield 41 is arranged to surround the conductors 28, 36 and 39 in a radial distance to the connector 39.

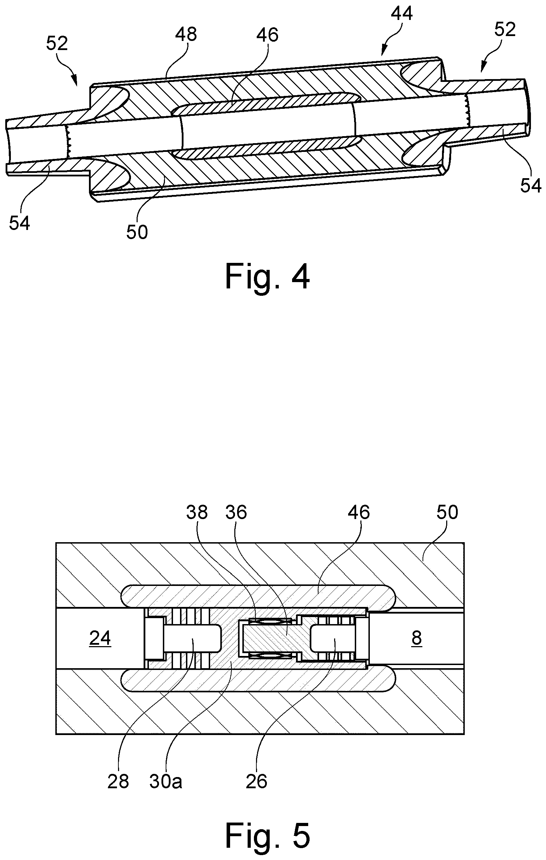

Fig. 4 shows a pre-molded joint body 44, in a sectional view. Here, an inner shield in form of an inner semiconducting layer 46 and an outer shield in form of an semiconducting layer 48 enclose an insulation layer 50. The axial extension of the outer semiconducting layer 48 exceeds the axial extension of the inner semiconducting layer 46. At end faces 52 of the pre-molded joint body 44, bushing-shaped flexible insulating collars 54 are provided. The pre-molded joint body 44 is configured to enclose the cable ends 10 and 22 as well as the respective connector 30a or 30b. The insulating collars 54 thereby snugly fit on the offshore cable 8 and the platform cable 24.

Fig. 5 shows the inner semiconducting layer covering the cable ends 10 and 22 as well as the connector 30a illustrated in fig. 3a. The insulating layer 50 overlaps a region that includes cable end sections with intact insulating layers and the respective connector 30a.

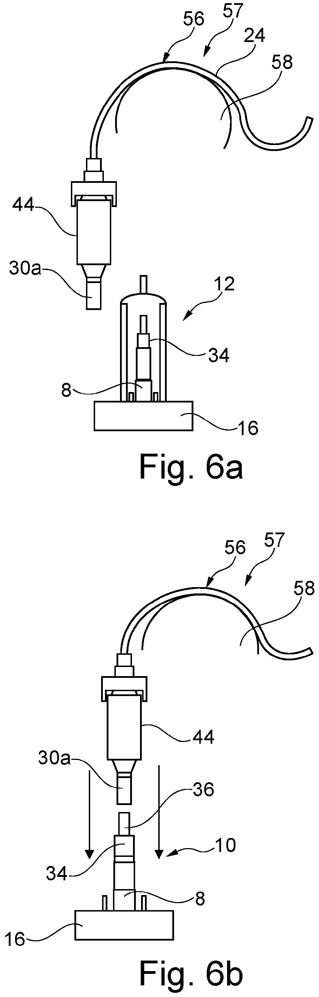

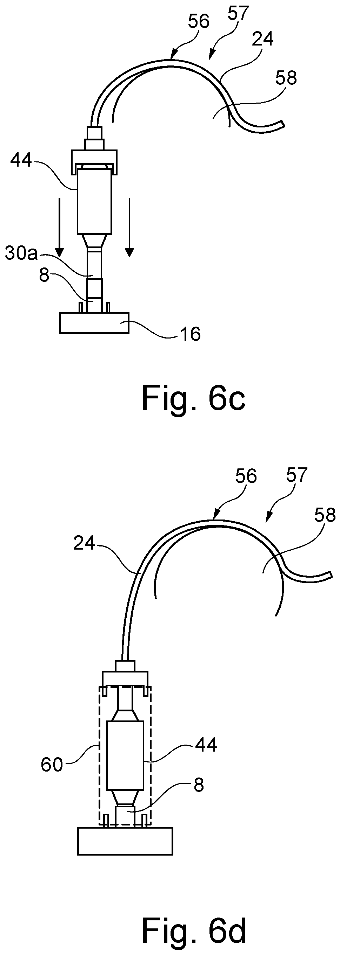

Fig. 6a shows the offshore cable 8 arranged in the hang-off device 16. Here, the pull-in head 12 is still attached to the offshore cable end 10, which has the connector insert 34 attached to it. Above the pull-in head 12, a platform cable end section 57 of the platform cable 24 is arranged on a support surface 56 of an assembly 58 for cable slack and maneuverability. The platform cable end 22 loosely hangs down from the support surface 56. The connector 30a is attached to the platform cable conductor 28 and points downwards.

The illustration of the assembly 58 is simplified and it may be an arbitrarily curved support surface, a channel, a number of individual holders, a bow or the like. The assembly 58 may be formed to hold the platform cable 24 in place when conducting the method described herein. Holding the platform cable 24 should preferably prevent the platform cable 24 slipping from the assembly 58 sideways, but should allow to move the platform cable 24 axially. For example, the assembly 58 could be liftable, such that the platform cable end section 57 loosely hangs down and can be placed horizontally and/or vertically by moving the assembly 58 above the platform. The assembly may be configured to allow the platform cable end section 57 to be pulled further downwards manually by workers to increase the free length hanging down from the assembly 58.

In this illustration, the pre-molded joint body 44 is placed on the platform cable 24 in a distance to the platform cable conductor 28.

Fig. 6b shows the offshore cable end 10 with the pull-in head 12 removed. The offshore cable conductor 26 and the connecting insert 34 point away from the hang-off device 16 in an upward direction. By moving the assembly 58 horizontally and/or vertically, the connector 30a can be placed coaxially to and in a desired distance from the connecting insert 34.

By lowering/moving the connector 30a and the platform cable and 22 towards the offshore cable conductor 26 afterwards, the cable insert 34 can be inserted into the connector 30a, as illustrated in Fig. 6c.

Afterwards, an outer protection sleeve 60 is placed around the joint body 44 for providing an additional protection of the joint. For example, the outer protection could be a steel sleeve, providing a protection against mechanical impacts. However, the sleeve 60 may be made from a variety of other materials depending on what conditions to consider. It may, for example, be provided in form of a wrappable material or a shrinkable tube.

### REFERENCE NUMERALS

- 2: platform
- 4: leg
- 6: lifting device
- 8: offshore cable
- 9: insulation system / outer layer
- 10: offshore cable end
- 12: pull-in head
- 14: winch wire
- 16: hang-off device
- 16a: platform interface flange
- 16b: split flange
- 16c: extension piece
- 16d: temporary clamp
- 16e: armor block cover
- 16f: armor block
- 16g: grounding point
- 16h: armor block flange
- 18: arm
- 20: upper side
- 22: platform cable end
- 23: offshore cable end section
- 24: platform cable
- 25: insulation system / outer layer
- 26: offshore cable conductor
- 28: platform cable conductor
- 30a: connector
- 30b: connector
- 32: crimping connection
- 34: connector insert
- 35: locking ring
- 36: axial extension piece
- 37: groove
- 38: gliding ferrule
- 39: connector
- 40: first receiving opening
- 41: metallic shield
- 42a: first receiving opening
- 42b: second receiving opening
- 44: pre-molded joint body
- 46: inner semiconducting layer / shield
- 48: outer semiconducting layer /shield
- 50: insulation layer
- 52: end face
- 54: insulating collar
- 56: support surface
- 57: platform cable end section
- 58: assembly
- 60: outer protection sleeve

## Claims

1. Method for connecting an offshore cable end (10) and a platform cable end (22) on a platform (2), the method comprising the steps of:
a) pulling the offshore cable end (10) of an offshore cable (8), wherein the offshore cable end (10) is covered by a pull-in head (12), onto the platform (2) through the pull-in head (12),
b) fixating the offshore cable end (10) in a platform-mounted hang-off device (16),
c) removing the pull-in head (12) from the offshore cable end (10),
d) placing the platform cable end (22) in a predefined position relative to the fixated offshore cable end (10),
e) connecting an offshore cable conductor (26) and a platform cable conductor (28) by attaching the offshore cable conductor (26) and the platform cable conductor (28) to a connector (30a, 30b, 39), and
f) enclosing the offshore cable end (10), the platform cable end (22) and the connector (30a, 30b, 39) by a joint body (44),
wherein step e) comprises axially moving the platform cable end (22) towards the offshore cable end (10), when the offshore cable is held by the hang-off device (16), such that at least one of the platform cable conductor (28) and the offshore cable conductor (26) is moved into the connector (30a, 30b, 39).

2. The method according to claim 1,
comprising the preceding step of:
p1) removing at least one outer layer of the platform cable end (22) prior to step a), thereby exposing at least the platform cable conductor (28).

3. The method according to claim 1 or 2,
comprising the preceding step of:
p2) arranging the joint body (44) on the platform cable end (22) in a distance to the platform cable conductor (28) or the offshore cable end (10) in a distance to the offshore cable conductor (26) prior to step f) in the form of a pre-molded joint body (44) that is slidable along the respective cable (8, 24).

4. The method according to claim 3,
wherein step f) comprises moving the joint body (44) relative to the cable ends (10, 22) to enclose the cable ends (10, 22) and the connector (30a, 30b, 39).

5. The method according to any of the preceding claims,
comprising the preceding step of:
p3) attaching the pull-in head (12) to the offshore cable end (10) to protect the offshore cable end (10) in a watertight manner.

6. The method according to any of the preceding claims,
comprising the preceding step of:
p4) placing the offshore cable end (10) with the attached pull-in head (12) into the sea prior to step a).

7. The method according to any of the preceding claims,
comprising the preceding step of:
p5) removing at least one outer layer (9) of the offshore cable end (10) prior to step a), thereby exposing at least the offshore cable conductor (26).

8. The method according to any of the preceding claims,
comprising the preceding step of
p6) finishing at least one exposed layer surface of at least one of the offshore cable end (10) and the platform cable end (22) to produce a predetermined surface quality for a connection interface.

9. The method according to any of the preceding claims,
wherein step d) comprises placing a platform cable end section (57), which comprises the platform cable end (22), on a support surface (56) such that the platform cable conductor (28) and the offshore cable conductor (26), when the offshore cable end (10) is held by the hang-off device (16), face each other and are arranged in a predetermined distance to each other.

10. System for connecting an offshore cable end (10) and a platform cable end (22) on a platform (2), the system comprising:
a pull-in head (12) configured to be attached to an offshore cable end (10) of an offshore cable (8),
a platform-mountable hang-off device (16) configured to hold the offshore cable (8),
a joint body (44) configured to be arranged on the platform cable, and
a conductive connector (30a, 30b, 39) configured to receive an offshore cable conductor (26) and a platform cable conductor (28),
wherein the system is configured to provide a connection of the offshore cable end (10) and the platform cable end (22) by pulling the offshore cable end (10) by means of the pull-in head (12) onto the platform (2), fixating the offshore cable end (10) in the hang-off device (16), removing the pull-in head (12) from the offshore cable end (10), placing the platform cable end (22), which has an exposed platform cable conductor (28), in a predefined position relative to the fixated offshore cable end (10), connecting the offshore cable conductor (26) and the platform cable conductor (28) by attaching the offshore cable conductor (26) and the platform cable conductor (28) to the connector (30a, 30b, 39), and enclosing the offshore cable end (10), the platform cable end (22) and the connector (30a, 30b, 39) by the joint body (44),
wherein connecting the offshore cable conductor (26) and the platform cable conductor (28) comprises axially moving the platform cable end (22) towards the offshore cable end (10), when the offshore cable is held by the hang-off device (16), such that at least one of the platform cable conductor (28) and the offshore cable conductor (26) is moved into the connector (30a, 30b, 39).

11. The system according to claim 10,
wherein the connector (30a, 30b, 39) has two receiving openings (42a, 42b) at opposite sides of the connector (30a, 30b, 39), and
wherein the connector (30a, 30b, 39) comprises locking elements (35) for locking at least one of the conductors (26, 28) in the respective receiving opening.

12. The system according to claim 11,
wherein the locking elements (35) comprise a locking ring (35).

13. The system according to any of claims 10 to 12,
wherein the connector (30a, 30b, 39) comprises a gliding ferrule (38) for receiving and centering the respective conductor (26, 28).

14. The system according to any of claims 10 to 13,
wherein the joint body (44) is a pre-molded joint body (44) configured to be slidable along the platform cable (24).

15. The system according to any of claims 10 to 14,
wherein the joint body (44) has an inner shield (46), an insulating layer (50) and an outer shield (48).

16. The system according to any of the claims 10 to 15,
comprising a platform-mountable lifting device (6) couplable with the pull-in head (12).
